# EUROPEAN PATENT APPLICATION

(11) **EP 2 224 460 A1**
(43) Date of publication of application: **01.09.2010**
(21) Application number: 08862733.6
(22) Date of filing: 15.12.2008
(51) Int. Cl.: H01C 7/02

(54) **PTC DEVICE, PTC DEVICE MANUFACTURING METHOD AND ELECTRIC DEVICE PROVIDED WITH PTC DEVICE**

(30) Priority: 18.12.2007 JP 2007325909
(71) Applicant: Tyco Electronics Japan G.K., Takatsu-ku Kawasaki-shi Kanagawa 2138535 (JP)
(72) Inventor: KOYAMA, Hiroyuki, Ibaraki 300-0626 (JP)
(74) Representative: Johnstone, Douglas Ian
(86) International application number: PCT/JP2008/072751
(87) International publication number: WO 2009/078372

(57) **Abstract**

There is provide a PTC device which is more compact. In the PTC device which comprises a first lead 14 electrically connected to a first metal electrode 18 of a PTC component 12, and a second lead 16 electrically connected to a second metal electrode 20 of the PTC component,
the first lead has a covering area that covers at least a part of the first electrode of the PTC component,
the second lead has a first area 24 that covers the bottom part of the PTC component and a second area 26 that extends outward from the periphery of the first area, wherein the second area forms a connecting area 38 on the edge or end thereof, a gap 60 exists between the first area and the connecting area, and the second area is connected to the second electrode in such a manner that the first area covers the bottom part of the PTC component, and
at least the side surface of the PTC component is covered by resin coating 50.

## Description

### Field of the Invention

The present invention relates to a PTC device, in particular a polymer PTC device used as a circuit protection device, and an electrical or electronic apparatus comprising such a device. More specifically, the present invention relates to a PTC device that uses a PTC component comprising a polymer PTC element containing metal filler as the conductive filler, in particular a filler that is easily oxidized under an oxygen atmosphere. In addition, the present invention relates to a manufacturing method for such a polymer PTC device.

### Background Art

Polymer PTC (Positive Temperature Coefficient) components are widely used as circuit protection devices in various electrical or electronic apparatuses to prevent important elements constituting such apparatus from failure if an excessively large current should flow through the power circuit and the like. Such a component is in itself well-known, and usually comprises a PTC element, normally in a laminar form and composed of a polymer composition with conductive fillers dispersed within the polymer, and metal foil electrodes disposed on the main facing surfaces thereof.

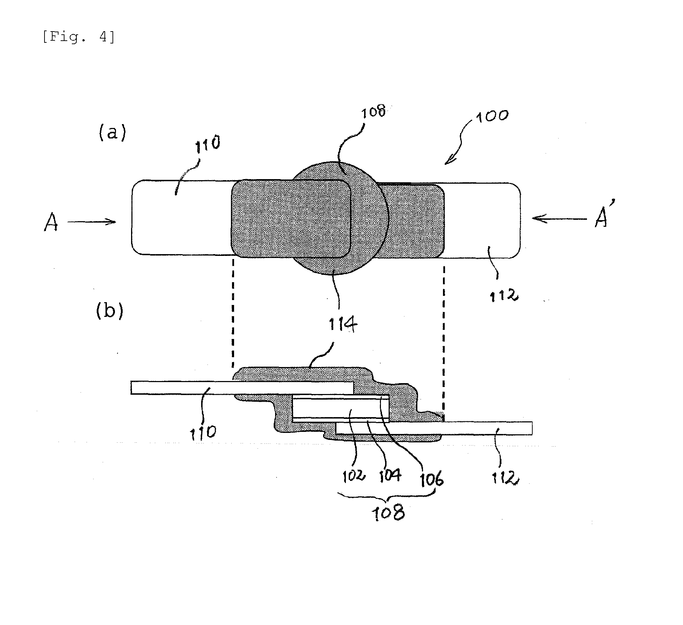

An example of a PTC device used in a rechargeable battery pack is a strap-type PTC device. This PTC device is shown in Figure 4 as a top view (Figure 4(a)) and a cross-sectional view (Figure 4(b), a cross-section along the center line A - A' in Figure 4(a)). This device 100 comprises a polymer PTC component 108 comprising a polymer PTC element 102 and metal electrodes (typically metal foil electrodes, 104 and 106) which are disposed (typically heat bonded) on the main surfaces of the both sides thereof. Leads 110 and 112 are each disposed, typically by soldering, on the metal electrodes on the both sides of the PTC component 108 to constitute the polymer PTC device.

The lead 110 on such a PTC device is connected for example to a cathode protruding on a sealing cap located on end of an aluminum case of a battery pack, while the other lead 112 is connected to a prescribed circuit, so that the battery pack is connected to the prescribed circuit through the PTC device as to function as a circuit protection device.

One requirement that a PTC component as described above needs to be equipped with is that the resistance of the PTC component itself in normal times has to be low. The metal filler, in particular nickel or nickel alloy filler, is used as the electrically conductive filler in the PTC element used in such a low-resistance PTC component. Such a metal filler is easily oxidized by the oxygen present in the ambient atmosphere of the PTC component, as a result of which the resistance of the PTC element increases. Such increase in resistance is not desirable in a PTC component that should essentially be low-resistance.

Thus, in a polymer PTC component using such a metal filler, measures are taken to form a resin coating 114 which covers at least the exposed areas of the PTC element so that they will not be exposed to the ambient atmosphere, thus preventing the oxidation of the metal filler. Since the main surfaces of the PTC element is covered, as described above, with the metal foil electrodes, such exposed areas are exclusively on the sides (i.e. the sides defining the thickness of a laminar PTC element, therefore the surface connecting the peripheries of the main facing surfaces of the PTC element).

However, in order to coat only the side surface and not to coat the remaining areas, the remaining areas need to be masked before forming the resin coating. The thickness of the PTC element is very small, for example 0.40mm, so that masking in order to leave such a small side surface can be extremely laborious. Therefore, in the simplest method, a resin is for example brushed on to cover at least the entire PTC component 108, after which the resin is hardened to form the coating. In Figure 4, such a coating 114 is schematically colored gray.
[Patent Reference 1] Patent Kokai Publication No. 2006-121049

### [Disclosure of the Invention]

### [Problems to be Solved by the Invention]

As can be understood from Figure 4, in order to reliably cover the PTC element with a resin coating, areas of the leads which areas are adjacent the PTC element also needs to be covered by the coating. As a result, only areas of the leads which are adjacent to the coated areas of the leads and which are not covered by the coating will function as leads. Therefore, the lead as a whole has to become larger, or more specifically, longer.

If the lead becomes longer, the PTC device as a whole becomes larger, and using such a device is not desirable in an electrical apparatus or an electronic apparatus which is required to be compact. Therefore, a more compact PTC device needs to be provided. Needless to say, it is desirable that such a compact PTC device is easily manufactured.

### [Means to Solve the Problems]

The inventor considered the reason why the areas that fundamentally will not function as a lead are formed. It has been noticed that, in order to reliably cover the PTC element with the coating, a brush of which width is wider than the width or the diameter of the disk if the element is disk-shaped, of the PTC component needs to be used, as a result of which the areas of the leads adjacent to the PTC component are also covered by the coating. It has further been noticed that a sufficient quantity of resin needs to be used in order to reliably cover the PTC element, so that there is a possibility that a part of the resin provided on the PTC element flows and spreads toward the leads, in which case again the areas of the leads adjacent to the PTC component are covered by the coating.

Further, it has been discovered that if an opening is provided on the metal lead connected to the PTC element which opening is close to the side of the PTC element, such resin flow will seldom not cross the opening and flow out, so that the flow of resin may be halted at the opening.

Further, since the opening cannot support the resin, and even if the resin is supplied, it would not be impossible for it to cross and fall through the opening, so that even if a wide brush is used when brushing on the resin, the areas that will not function as the leads as described above will not be too large.

The present invention will be described below. It is noted that the polymer PTC element and the PTC component used in the specification are well-known. The term "PTC component" is used in the meaning of the term generally used, and denotes a PTC component which comprises a polymer PTC element and a first metal electrode and a second metal electrode which are disposed on main surfaces thereof respectively. The polymer PTC element is composed of a polymer material (for example, a polyethylene, a polyvinylidene fluoride, etc.) having an electrically conductive filler (for example, carbon black, metal filler (filler such as copper, nickel, nickel-cobalt alloy), etc.) dispersed therein, i.e. a so-called electrically conductive polymer composition.
The PTC component is typically an element having metal electrodes (typically metal foil electrodes) laminated on the entire main surfaces on the both sides of a laminar PTC element, which is as a whole laminar and may be disk-shaped or a thin rectangular shape.

In the first aspect, the present invention provides a method of manufacturing a PTC device, comprising:
(1) a step to electrically connect a first lead to a first electrode of a PTC component,
(2) a step to electrically connect a second lead to a second electrode of the PTC component,
(3) a step to apply the PTC component with a hardening resin so that at least a side surface of the PTC component is covered with the hardening resin, and
(4) a step to harden the hardening resin,
   characterized by:
   in step (1), the first lead having a covering area that covers at least a part of the first electrode of the PTC component,
   in step (2), the second lead having a first area that covers a bottom part of the PTC component and a second area which extends outward from a periphery of the first area, wherein the second area forms a connecting area (to a prescribed electric element) at an edge or end thereof, a gap exists between the first area and the connecting area (i.e. a region or space in which no material is present which forms the lead), and the connection of the second lead to the second electrode is executed in such a manner that the first area covers the entire bottom part of the PTC element, and
   step (3) being executed in such a manner that there is no hardening resin on the connecting area of the second lead after the hardening resin has been applied.

In step (3), at least a part of one or both of the first lead and an area of the first electrode which is not covered by the first lead (if it exists) may also be covered with the hardening resin. In another embodiment, depending on the application convenience of the hardening resin, the first lead and the whole of the area of the first electrode which is not covered by the first lead may be covered with the hardening resin. In a further embodiment, the first lead overlaps exactly with the first electrode, and the hardening resin is applied so that the hardening resin covers at least a part of, and preferably entire, the first lead. The back of the second lead (i.e. an exposed side) is not covered with the hardening resin. In a further embodiment, the back of the second lead except the connecting area may be at least partly coated with the hardening resin if necessary.

When the hardening resin is also applied onto the first lead of the PTC component, and if the first electrode cannot perform its function due to the applied resin, an additional step may be performed after step (4) to remove the hardened resin on the first lead (for example by grinding or cutting) and expose at least a part of the first lead. When the resin is coated on only a part of the first lead and there is no need to remove the resin, the step to remove the hardening resin is not necessarily required.

The present invention also provides a PTC device preferably obtained by the method of manufacturing the PTC device of the present invention as described above.

Therefore, in the second aspect, the present invention provides a PTC device comprising a first lead electrically connected to a first metal electrode of a PTC component, and a second lead electrically connected to a second metal electrode of the PTC component, characterized by:
the first lead having a covering area that covers at least a part of the first electrode of the PTC component,
the second lead having a first area that covers a bottom part of the PTC component and a second area that extends outward from a periphery of the first area, wherein the second area forms a connecting area on an edge or end thereof, a gap exists between the first area and the connecting area, and the second area is connected to the second electrode in such a manner that the first area covers the bottom part of the PTC component, and
at least a side surface of the PTC component being covered by a resin coating (obtained by the hardening resin hardening) (Note: the connecting area is exposed, i.e. not covered by the resin coating).

In the present invention, the "covering area" that the first lead has denotes an area which covers the first metal electrode of the PTC component while being in contact with the first metal electrode. The term "connecting area" that the second lead has denotes an area that can be utilized when electrically connecting the PTC device to a prescribed electrical element (for example, other lead, an electrode on a sealing cap of a secondary battery, a prescribed circuit, etc.). More specifically, the "connecting area" denotes an area that can be utilized for soldering the PTC device to a prescribed electrical element (i.e. an area that is a part of the second lead wherein solder can be present between said part and the electrical element), or an area that can be utilized for resistance welding (spot welding) (or laser welding) the PTC device to a prescribed electrical element (i.e. the area that is a part of the second lead wherein a tip of an electrode pin may be positioned for resistance welding said area and the electrical element). Therefore, if the resin coating is present on at least one side of the "connecting area", there may be an adverse effect when connecting to the prescribed electrical element by soldering, resistance welding or the like, so the resin coating is not present on the both sides (i.e. the front side and the back side) of the "connecting area". Therefore, it may be said that the "connecting area" is an edge or end part of the second lead which part is in an exposed stated at its front side and back side.

As to the area between the first area and the connecting area, the hardening resin (when before hardening in the method according to the present invention) or the resin coating (when after hardening in the method according to the present invention or in the device according to the present invention) is present in the portion of the connecting area which area is adjacent to the first area (i.e. the hardening resin or the resin coating covering the side of the PTC component is present on a portion of the second area which portion is adjacent to the first area and at least to the extent of the thickness of the hardening resin or the resin coating). Further, the hardening resin or resin coating may extend from said portion toward the end or edge of the second area. In other words, said portion is an area extending outward from the first area, and it may be present at the maximum just before the connecting area. Thus, the resin may be present on a whole of an area between the first area and the connecting area.

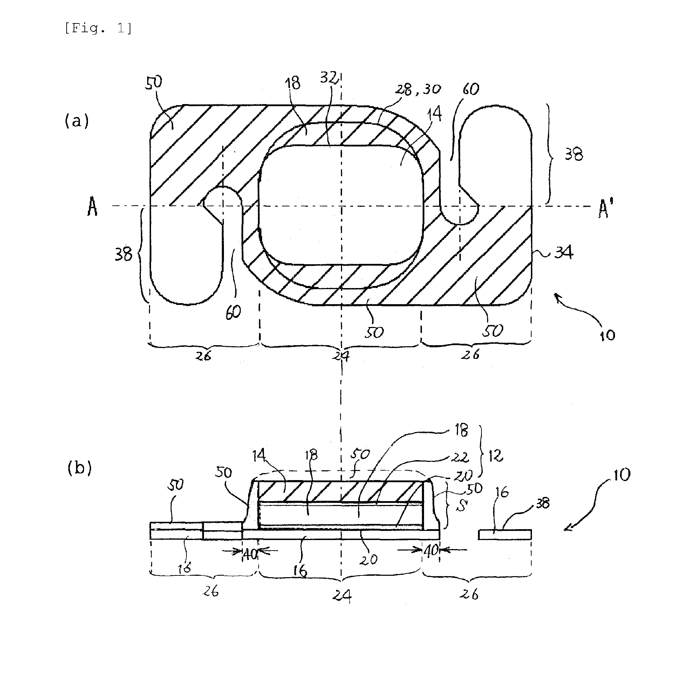

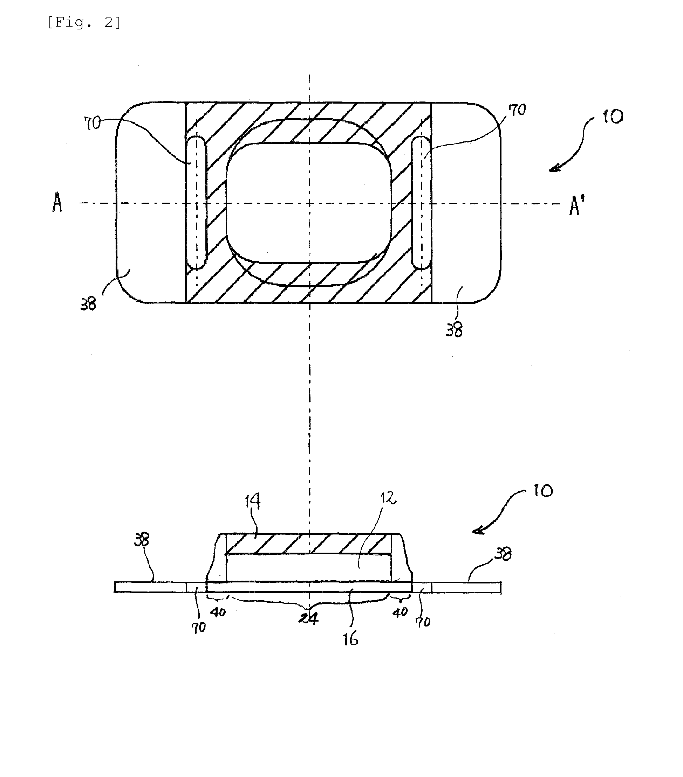

In the present invention, the second lead has a gap between the first area (and therefore the PTC component) and the connecting area. The gap is in the form of an open slit in one aspect (see Figure 1) and in the form of a closed slit in another aspect (see Figure 2). The former form means that the second area extends like a peninsula from the first area of the second lead, as a result of which a bay-like section is formed as the gap between the peninsula and the first area. The latter form means that an elongated inland sea-like section (or an elongated lake-like section) is present between the first area and the connecting area of the second lead, and the first area and the connecting area are linked at both ends of the inland sea-like section. In the broadest concept, the gap of the present invention is a space located beside and separated from the PTC component, and cuts off the flow of the hardening resin supplied to the PTC component which would otherwise flow toward the connecting area.

In the present specification, the term "outline" denotes an outer periphery of the element in question. It is noted that when the outline is said to be "located inside", "located outside", or "overlapping", this is in reference to the plan view of the PTC device as shown in Figure 4. In other words, the thicknesses of the leads, the metal electrodes, and the PTC element are ignored.

Thus, the term "outline of the first lead" denotes the outer periphery which defines the first lead and this outline is overlapping exactly with an outer periphery of the first metal electrode or is present within such periphery. In other words, the outline of the first lead is not present, even partially, outside the first metal electrode.

The term "outline of the second lead" denotes an outer periphery which defines the second lead, and this outline is present outside the outline of the bottom surface of the PTC component (and therefore outside the outline of the second metal electrode), and is not present inside the outline of the second metal electrode. Therefore, the outline of the second metal electrode defines the first area of the second lead and the area extending outward from the outline of the second metal electrode (i.e. its periphery) forms the second area.

It is noted that the hardening resin may by any known resin in liquid-like form that is known to be used on a PTC device to prevent oxidation of the conductive filler for the PTC element. The liquid-like form resin denotes a resin that, when supplied as described above to the side of the PTC component, spreads easily on the second lead, as a result of which, if the gap of the present invention did not exist, the formation of an appropriate connecting area would not be easy.

If the hardening resin is not in the first place in the liquid form, the present invention is useful when the resin that has been diluted or dispersed in an agent into the liquid form is like the resin described above. The hardening resin may contain other additive(s) (for example a hardening agent, hardening accelerator, etc.) as required. The hardening of the hardening resin may be executed in any appropriate method depending on the type of the resin, and may for example be hardened by UV rays, electron beams, heating, and the like. A particularly preferred resin is a thermosetting resin.

It is noted that the present invention also provides an electronic component or an electrical component (for example a battery sealing cap, Ta capacitor, etc.) which comprises the PTC device of the present invention as described above and below, and further an electrical apparatus or an electronic apparatus using such a component. Examples of such apparatuses would be a battery pack (in particular a secondary battery pack) using the PTC device as a circuit protection device, a motor, a USB circuit, and the like.

### [Effect of the Invention]

In the method according to the present invention, the gap is located to the side of the PTC component, so that hardening resin supplied onto the PTC component to form an oxidation preventing resin coating will be inhibited from flowing toward the end or edge of the second lead. As a result, the hardening resin may be prevented from flowing to the end or edge of the second lead and obstructing the formation of an appropriate connecting area.

### [Brief Explanation of the Drawings]

[Figure 1] The PTC device of the present invention is schematically shown as a top view (Figure 1(a)) and a cross-sectional view (Figure 1(b)).
[Figure 2] Another embodiment of the PTC device of the present invention is schematically shown as a top view (Figure 2(a)) and a cross-sectional view (Figure 2(b)).
[Figure 3] A top view of a sealing cap provided with the PTC device of the present invention (Figure 3(a)) and a top view of a sealing cap provided with a PTC device in the prior art (Figure 3(b)) are shown schematically.
Figure 4] A PTC device in the prior art is schematically shown as a top view (Figure 4(a)) and a cross-sectional view (Figure 4(b)).

### [Explanation of the References]

- 10 -: PTC device; 12 - PTC component; 14 - first lead; 16 - second lead;
- 18 -: PTC element; 20 - second metal electrode; 22 - first metal electrode;
- 24 -: first area; 26 - second area; 28 - outline of the first metal electrode;
- 30 -: outline of the second metal electrode; 32 - outline of the first lead;
- 34 -: outline of the second lead; 38 - connecting area; 40 - rim area;
- 50 -: hardening resin or resin coating; 60 - bay-like section;
- 70 -: inland sea-like section; 100 - PCT device; 102 - PTC element;
- 104, 106 -: metal electrode; 108 - PTC component;
- 110, 112 -: lead; 114 - resin coating; 116 - resin cover;
- 200 -: sealing cap; 202 - cathode terminal;
- 204 -: protection circuit substrate; 206 - lead; 208 - electronic component;
- 210 -: anode; 212 - lead;
- 214 -: safety valve

### [Embodiments to Carry Out the Invention]

The present invention is further explained in detail with reference to the drawings. Figure 1 shows a PTC device 10 according to the present invention schematically as a top view (Figure 1(a)) and a cross-sectional view (Figure 1(b)) along the line A-A' in the top view. The PTC device 10 comprises a PTC component 12 as well as a first lead 14 disposed on its upper surface and a second lead 16 disposed on its lower surface. The PTC component 12 is constructed of a first metal electrode forming its upper surface and a second metal electrode 20 forming its lower surface, and a PTC element 18 sandwiched between them.

A portion of the first metal electrode of the PTC component 12 which portion is not covered by the first lead 14, and the thickness part of the first lead and the side section of the PTC component 12 (these are shown in Figure 1(b) as Region S) are covered by the resin coating 50 formed by the hardening resin hardening. It is noted that in Figure 1(a), the resin coating 50 is shown as a shaded area.

In the illustrated embodiment, the metal electrodes 20 and 22 of the PTC component and the PTC element 18 sandwiched between them, are substantially of the same shape even though the thicknesses thereof are different. Therefore in Figure 1(a), the outline 28 of the first metal electrode 22 and the outline 20 of the second metal electrode overlap with each other, and the outline 28 of the PTC component 12 also overlap with them. The first lead 14 disposed on the first metal electrode covers a part of the first metal electrode 22 while its upper surface is entirely exposed. Therefore, the outline 32 of the first lead 14 overlaps with the outline 28 of the first metal electrode partly (on the right and left side of the outlines 28) and the other part of the outline 32 is present within the outline 28 of the first lead. In the other words, the outline of the lead 32 is not located outside of the outline 28 of the first metal electrode.

The outline 34 of the second lead 16 is located in its entirety outside the outline 30 of the second metal electrode 20. Therefore, the second lead 16 also has an area immediately adjacent to the periphery of the second metal electrode 20 (for example, the area shown as "→40←", also called a rim area 40). Such an area has a function of supporting the hardening resin when the hardening resin is applied.

In the illustrated aspect, the second lead 16 is composed of a first area 24 which covers the bottom surface of the PTC component 12 and a second area 26 which extends outward therefrom. The second area includes the rim area 40 which is adjacent to the periphery of the first area and which extends outward therefrom. Since the first area 24 constitutes only the area located under the bottom surface of the PTC component 12, it goes without saying that, in addition to the sections 26 to the left and right as shown in Figure 1(a), sections which constitute the second area are present outside the PTC component 12 above and below.

As described above, in the area 38 that is the edge or end of the second lead 16 and that is not coated with the resin coating 50, the lead 16 is exposed as it is so that it can be used to electrically connect the PTC device to other electrical element. For example, an electrical element to be connected (for example another lead, pad, contact, wiring section, etc.) may be connected by resistance welding wherein the electrical element is placed under the area 38 while pressing with an electrode pin to the area 38. Therefore, such an area 38 is called the connecting area in the present specification.

The reason why such a connecting area 38 is ensured even when the hardening resin is supplied, for example by a brush, onto the PTC component is that the second lead defines a bay-like section 60 as the gap of the second lead. As can be understood from the figure, the bay-like section 60 is defined between the connecting area 38 of the second lead and the rim area 40 of the second lead. In other words, the second lead has an L-shaped area extending in an L-shaped protrusion from the rim area 40, or more specifically from its edge, and the vicinity of the tip of the L-shaped area constitutes the connecting area 38.

In the case wherein the PTC device is thus constructed using the second lead having the gap, even if the hardening resin for preventing the oxidation is supplied onto the first lead located on the upper surface of the PTC component 12, the supplied hardening resin cannot flow directly toward the connecting area 38. Even if it flows off the first lead, the flow will stop close to the section where the L-shaped area is connected to the first area, or slightly more forward at the angled section of the L-shape, as shown in the shaded part of Figure 1(a), so that the connecting area can be secured.

The method of manufacturing the PTC device of the present invention as described above comprises preparing the PTC component, then, as described above:
(1) a step to electrically connect the first lead 14 to the first electrode 22 of the PTC component 12,
(2) a step to electrically connect the second lead 16 to the second electrode 20 of the PTC component 12,
(3) a step to apply the hardening resin 50 to the PTC component 12 so that at least the side surface thereof is covered, and
(4) a step to harden the hardening resin (thereby forming the resin coating 50). With respect to the PTC component, a PTC component which is known to the art may be used, as previously explained. The second lead is also as previously explained.

In step (1), the first lead 14 has a cover area that covers at least a part of the first electrode 22 of the PTC component (covering a part in the embodiment shown in Figure 1), and therefore the outline 32 of the first lead overlaps with the outline 28 of the first electrode or is present within the outline 28. In the embodiment shown in Figure 1, a part of the outline of the first lead (the parts shown vertically in the drawing) overlaps with the outline of the first electrode, and the other parts are present within the outline of the first electrode.

In step (2), the second lead 16 has, as described above, a first area 24 which covers the bottom surface of the PTC component and a second area 26 which extends outward from the periphery of the first area; thus the outline 34 of the second lead is located outside that outline 30 of the second metal electrode. The second area comprises, at its edge or end, a connecting area 38 to a prescribed electrical element. A gap 60 exists between the first area and the connecting area, and the connection of the second lead to the second electrode is executed so that the first area 24 covers the bottom surface of the PTC component and therefore the entirety of the second metal electrode 20.

In step (3), the application of the hardening resin is executed such that, after coating, there is no hardening resin on the lower surface of the connecting area 38 of the second lead. However, with respect to the first lead, it may be covered entirely, or in another embodiment, it may be only partly covered. In Figure 1(b), the broken line shows how the hardening resin 50 covers the first lead entirely. After hardening, the hardened resin located on the top of the first lead 14 is removed to expose the first lead 14, to allow connection to a prescribed electrical element.

The application of the hardening resin may be executed by any appropriate method, and is executed by, for example, brush coating, cloth coating, spraying, dispensing, or the like. In this case, the spot to be applied is at least the side portion of the PTC component 12, and the hardening resin may be additionally applied onto at least a part of the exposed part of the first lead connected to the PTC component if such first lead exists. In the illustrated embodiment, in addition to the side of the PTC component, the hardening resin is applied onto the entirety of the first lead (as shown with the broken line), the exposed part of the first metal electrode, and a part of the second area adjacent to the first area of the second lead (the area shown shaded in Figure 1(a); shading, however, is not provided on the first lead as the resin is removed after hardening).

Upon the application of the hardening resin, with respect to the second lead, it is preferred that only a part of the second area is coated which part is adjacent to the first area as far as possible. The application is executed so that the hardening resin is not coated on the connecting area. For example, by appropriately selecting the width of the brush, the direction of the coating (for example in Figure 1(a), the application is performed diagonally from the top left to the bottom right), the quantity of the resin on the brush, and the like, the resin can be prevented from being coated on the connecting area. In another embodiment, the area which is to become the connecting area may be masked and the hardening resin be applied only on the other areas.

As described above, the hardening resin is hardened after its application to form the resin coating. Hardening may be performed using heat, light, radiation, or the like, depending on the resin used. After hardening, unwanted resin is removed if necessary. For example, the resin coating on the first lead is preferably removed to expose the first lead.

Another embodiment of the PTC device according to the present invention is shown schematically in Figure 2 as a top view and a cross-sectional view, as in Figure 1. The illustrated embodiment is substantially the same as that of Figure 1 with the exception of the shape of the second lead 16 being different. In the embodiment in Figure 2, the second lead 16 has an elongated inland sea-like section 70 as the gap. This inland sea-like section 70 is located between the rim area 40 of the second lead adjacent to the first area 24 of the second lead 16 and the connecting area 38 of the second lead 16, and the rim area 40 and the connecting area 38 are linked in the vicinity of the both ends of the inland sea-like section 70. In other words, the second area extends from the rim area 40 of the second lead in a sideways cornered "U" shape (in the illustrated embodiment, the legs of the sideways cornered "U" shape (the "|" parts are short), and the base part (the "_" section) connecting them and located between the legs of the sideways cornered "U" shape constitutes the connecting area 38.

Also in the illustrated embodiment, because a gap 70 is present adjacent to the rim area 40, an excess amount of the resin will not cross the inland sea-like section 70 and not reach the connecting area 38 even if such excess amount of the resin is applied onto the PTC component when hardening resin is applied to the side of the PTC component. In other words, the connection area 38 can be secured in a suitable state for connection with other electrical element.

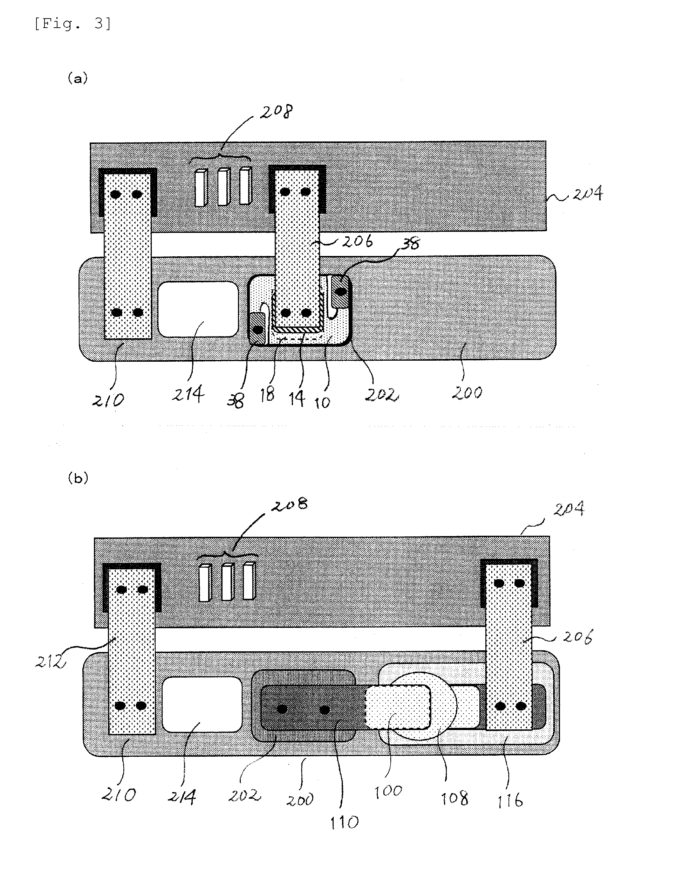

Figure 3(a) shows schematically a plan view of the PTC device 10 according to the present invention shown in Figure 1 as it is installed on a cathode terminal 202 of a secondary battery sealing cap 200. For a comparison, Figure 3(b) shows the PTC device 100 shown in Figure 4 as is it installed on a cathode 202 of the sealing cap 200.

In the illustrated embodiment, the PTC device is installed on the sealing cap and the PTC device (10 or 100) is connected to a protection circuit substrate 204 by the lead 206. Prescribed electronic components 208 are mounted on the protection circuit substrate 204, prescribed electrical wirings (not illustrated) are formed, and these together with the PTC device form the protection circuit. It is noted that in the illustrated embodiment, other location (location 210 that functions as an anode) of the sealing cap 200 is connected to the circuit protection substrate 204 by other lead 212. It is noted that the sealing cap also has a safety valve 214.

As can be easily understood from Figure 3, since the PTC device 10 according to the present invention has a more compact shape, the PTC device may be connected directly, for example by resistance welding, to the cathode terminal 202 of the sealing cap. It is noted that In the drawing, the small black dots show the points where the electrode pins were positioned during the resistance welding. The electrode pins may be disposed on the connecting area 38 of the PTC device of the present invention to connect the PTC device 10 to the cathode terminal 202 of the sealing cap. Further, a lead 206 may be resistance welded to the first lead of the PTC device 10 similarly to connect the PTC device 10 and the protection circuit substrate 204. As can be seen from the drawing, because the PTC device 10 of this invention may be connected on the cathode terminal 202, the area of the sealing cap 200 to the side of the cathode terminal (the right hand area of the sealing cap in the drawing) is unused, and can be used for various purposes. For example, other electronic components and/or other wirings may be provided to give additional functions to the protection circuit design. Alternatively, other circuits may be provided which is connected to the protection circuit, which leads to increasing the flexibility of the circuit design. Also, since the unused area is distanced from the PTC component 12, a heat-generating electronic component may be provided in such an area, which thereby also leads to increasing the flexibility of the circuit design.

In contrast, when a PTC device 100 in the prior art is connected to the sealing cap 200, the lead 110 is connected to the cathode terminal 202 of the sealing cap, so that the PTC component 108 itself is to be positioned, not on the cathode terminal of the sealing cap, but in a location shifted sideways therefrom. Therefore, a considerable portion of the upper surface of the sealing cap is occupied by the PTC device. There is no area as described above that can be utilized for the other purposes.

Further, as shown in Figure 3(a), the PTC device 10 of the present invention is positioned directly over the cathode terminal 200 of the sealing cap 200. It is said that, in a secondary battery, the spot particularly which is prone to be high temperatures during an abnormal charge or discharge is the cathode. By locating the PTC device according to the present invention directly over such a cathode (i.e. on the cathode terminal), the detection sensitivity of an abnormally generated high temperature may be improved. In the embodiment shown in Figure 3(b), since the PTC device is placed in a spot relatively distanced from the electrode and the PTC device is placed via a resin cover 116 which serves as an insulation plate, the detection sensitivity of the abnormally generated high temperature is inferior to the embodiment shown in Figure 3(a).

### [Industrial Applicability]

As can be easily understood when the two embodiments in Figure 3 are compared, the PTC device according to the present invention is more compact than the PTC device in the prior art. Therefore, such compactness provides areas or spaces that can be used for the other purposes, as a result of which an electrical or electronic apparatus can be made more compact.

## Claims

1. A PTC device which comprises a first lead electrically connected to a first metal electrode of a PTC component, and a second lead electrically connected to a second metal electrode of the PTC component, **characterized by**:
the first lead having a covering area that covers at least a part of the first electrode of the PTC component,
the second lead having a first area that covers a bottom part of the PTC component and a second area that extends outward from a periphery of the first area, wherein the second area forms a connecting area on an edge or end thereof, a gap exists between the first area and the connecting area, and the second area is connected to the second electrode in such a manner that the first area covers the bottom part of the PTC component, and
at least a side surface of the PTC component being covered by a resin coating.

2. The PTC device according to Claim 1, wherein the connecting area is not covered by the resin coating in order to connect to a prescribed electrical component.

3. The PTC device according to Claim 1 or 2, wherein a shape of the gap is in the form of an open slit.

4. The PTC device according to Claim 1 or 2, wherein the shape of the gap is in the form of a closed slit.

5. The PTC device as described in any one of Claims 1 to 4, wherein a peripheral area located in the periphery of the first area of the second lead has a function of supporting a coated hardening resin.

6. A method of manufacturing a PTC device comprising a PTC component and leads connected thereto, the method comprising:
(1) a step to electrically connect a first lead to a first electrode of the PTC component,
(2) a step to electrically connect a second lead to a second electrode of the PTC component,
(3) a step to coat a hardening resin to the PTC component so that at least a side surface of the PTC component is covered, and
(4) a step to harden the hardening resin,
**characterized in that:**
in step (1), the first lead has a covering area that covers at least a part of the first electrode of the PTC component,
in step (2), the second lead has a first area that covers a bottom part of the PTC component and a second area extending outward from a periphery of the first area, wherein the second area forms a connecting area at an edge or end thereof, a gap exists between the first area and the connecting area, and connection of the second lead to the second electrode is executed in such a manner that the first area covers the bottom part of the PTC component, and
step (3) is executed in such a manner that there is no hardening resin on the connecting area of the second lead after the hardening resin has been coated.

7. The manufacturing method according to Claim 6, wherein the hardening resin is coated so that the first lead and all exposed area of the first electrode are covered, then removing a portion of the hardened resin, and the method further comprises a step of, after hardening the resin, exposing at least a part of the first lead is exposed by removing a part of the hardened resin.

8. An electrical/electronic component comprising the PTC device according to any one of Claims 1 to 5.

9. The component according to Claim 8 wherein the component is a sealing cap for a secondary battery.

10. An electrical/electronic apparatus comprising the electrical/electronic component according to Claim 8 or 9.

11. The apparatus as described in Claim 10, wherein the apparatus is a secondary battery pack.
